# FASCICULE DE BREVET EUROPEEN

(11) **EP 3 829 188 B1**
(45) Date de publication et mention de la délivrance du brevet: **28.09.2022**
(21) Numéro de dépôt: 20205104.1
(22) Date de dépôt: 02.11.2020
(51) Int. Cl.: H04Q 9/00, G01D 4/00, G05B 15/02, G08C 17/02, H04L 12/28, H04W 4/30, H04L 67/12, H04L 67/125

(54) **PROCÉDÉ DE PILOTAGE D'UNE INSTALLATION ÉLECTRIQUE**
VERFAHREN ZUR STEUERUNG EINER ELEKTRISCHEN ANLAGE
METHOD FOR CONTROLLING AN ELECTRICAL INSTALLATION

(30) Priorité: 29.11.2019 FR 1913560
(43) Date de publication de la demande: 02.06.2021
(73) Titulaire: Electricité de France, 75008 Paris (FR)
(72) Inventeur: COINCE, Anne-Sophie, 77210 AVON (FR); GASTIGER, Frédéric, 77210 AVON (FR); BERNASCONI, Stéphane, 77810 THOMERY (FR)
(74) Mandataire: Plasseraud IP

(56) Documents cités:
- FR-A1- 2 986 359
- FR-A1- 3 005 228

## Description

### Domaine technique

L'invention concerne le domaine du pilotage par télé-information d'installations électriques, dans le but de réguler la consommation d'énergie électrique.

### Technique antérieure

Les fournisseurs d'énergie électrique cherchent à réguler et à anticiper la consommation électrique des installations de leurs abonnés. En effet, les moyens actuels de production d'électricité réagissent difficilement aux fortes variations de la demande en énergie.

Afin de limiter les fluctuations de la consommation électrique, les fournisseurs d'énergie électrique proposent des offres commerciales dites d'effacement consistant à éviter la consommation d'électricité pendant les périodes de pointe contre des avantages financiers en période creuse.

Les fournisseurs d'énergie électrique cherchent donc à recueillir des informations sur la consommation chez un abonné pour réguler sa consommation par des commandes de télé-information provenant du compteur. A cet effet, l'installation électrique peut être équipée d'un compteur électrique muni d'une électronique de gestion, un tel compteur étant dit également « compteur connecté » ou « compteur communicant ». Le compteur communicant permet la récupération d'informations de consommation et leur transmission vers des systèmes de gestion des fournisseurs d'énergie électrique.

Les systèmes existants ne sont pas contrôlés par l'abonné mais par le fournisseur de service, et ne permettent qu'une collecte partielle d'informations.

### Problème technique

Un bon pilotage de la consommation électrique d'une installation requiert la récupération de différents types de données de consommation en vue de déterminer précisément les commandes de pilotage à mettre en place et répondre aux besoins de l'utilisateur de façon adéquate. Les offres commerciales d'effacement proposées par les fournisseurs d'énergie électrique permettent, dans une certaine mesure, de minimiser les coûts relatifs à la consommation électrique de l'installation mais ne répondent pas précisément aux besoins réels et immédiats de l'utilisateur.

Classiquement, les abonnés ont également la possibilité de doter leurs installations électriques d'un système de gestion locale de l'énergie consommée. En particulier, ces systèmes permettent à un abonné de pouvoir programmer des usages pendant les heures creuses/pleines, de visualiser leur consommation instantanée, mais également de pouvoir délester certains de leurs appareils domestiques en fonction de certaines données délivrées par le compteur électrique. Les télé-informations peuvent être utilisées comme informations de pilotage par le système de gestion locale.

Les systèmes de gestion d'énergie communicants permettent le pilotage à distance des équipements mais nécessitent l'installation de matériel. Il est donc également souhaitable que l'instrumentation nécessaire à un tel pilotage de la consommation soit facile à opérer sur une installation et permette un pilotage pratique et direct par l'utilisateur.

Le document FR2986359 décrit un dispositif de pilotage d'une installation électrique, disposé entre le compteur et l'installation, et adapté à modifier au moins un champ d'information tarifaire d'une consigne de télé-information par une deuxième consigne.

### Résumé

La présente divulgation vient améliorer la situation.

Il est proposé un procédé de pilotage d'au moins un équipement électrique d'une installation comprenant en outre un dispositif de comptage adapté pour piloter l'équipement électrique à travers une consigne de fonctionnement, le dispositif de comptage étant adapté en outre pour communiquer avec un concentrateur d'un poste de transformation électrique, le concentrateur étant adapté pour communiquer avec un système d'information,
dans lequel le concentrateur est agencé pour envoyer au dispositif de comptage un signal de fonctionnement d'au moins un équipement électrique,
le procédé comportant les étapes suivantes :
   a. Réception auprès du système d'information de données d'une demande issue d'un usager, de pilotage utilisateur de l'équipement, la demande de pilotage utilisateur indiquant au moins un type de pilotage et une période d'application dudit pilotage, et traitement de la demande de pilotage utilisateur en fonction du type d'équipement, du type de pilotage et de la période, pour délivrer au concentrateur une demande de pilotage utilisateur traitée indiquant une période de pilotage calculée ;
   b. Emission, par le concentrateur, d'un signal de fonctionnement modifié en fonction de la demande de pilotage traitée;
   c. Pilotage, par le dispositif de comptage, de l'équipement électrique à travers la consigne de fonctionnement en fonction dudit signal de fonctionnement modifié.

La solution proposée présente l'avantage de piloter individuellement la consommation d'un point de livraison, et permet à l'utilisateur de piloter un équipement électrique en transmettant une demande issue d'un usager, de pilotage utilisateur de l'équipement. La demande de pilotage utilisateur peut être simplement transmise par l'usager à travers l'interface de gestion d'une application mobile ou d'un site web. La solution proposée peut être mise en place dans une installation équipée d'un compteur communicant sans nécessiter l'installation d'un matériel supplémentaire.

Avantageusement, à l'étape (a) du procédé de pilotage, une requête d'application de la demande de pilotage utilisateur sur la période de pilotage calculée est générée en fonction du type d'équipement, du type de pilotage et de la période d'application. Plus particulièrement, la demande de pilotage utilisateur peut être traduite en plusieurs requêtes d'application indiquant chacune un type de pilotage sur une subdivision de la période d'application. En effet, l'exécution de la demande de pilotage utilisateur peut nécessiter l'exécution de différents types de pilotage au cours de la période d'application du pilotage.

Selon un mode de réalisation, le signal de fonctionnement comporte un calendrier de fonctionnement, le signal de fonctionnement modifié comportant une modification dudit calendrier en fonction de ladite demande de pilotage utilisateur traitée.

Selon un mode de réalisation, le calendrier comporte des jours types de fonctionnement, un jour type de fonctionnement comportant au moins un mode de fonctionnement sur un créneau horaire, la modification dudit calendrier consistant à remplacer un jour type dans la période de pilotage calculée par un jour type spécifique, le jour type spécifique étant déterminé en fonction du type de pilotage.

Avantageusement, selon une première variante, le signal de fonctionnement modifié consiste à télécharger dans le dispositif de comptage un calendrier de fonctionnement modifié. Le calendrier de fonctionnement modifié est obtenu en modifiant le calendrier de fonctionnement qui est administré dans le système d'information.

Selon une deuxième variante, le signal de fonctionnement modifié contient un ordre d'application de journées-types dites de « pointe mobile », pendant la période de pilotage calculée, en substitution aux journées-types prévues dans le calendrier de fonctionnement. Le calendrier de fonctionnement administré dans le système d'information n'est pas modifié.

Selon un mode de réalisation, la demande de pilotage utilisateur est une demande d'arrêt de fonctionnement de l'équipement pendant la période d'application dudit pilotage.

Selon un mode de réalisation, le dispositif de comptage commande l'équipement à travers un contact physique, de type « contact sec à fermeture ».

Selon un mode de réalisation, le dispositif de comptage comporte une interface de communication adaptée à communiquer avec l'équipement, l'interface de télécommunication émettant une consigne de télé-information en fonction de la consigne de fonctionnement, la consigne de télé-information étant interprétée par un module de pilotage de l'équipement.

Selon un mode de réalisation, ledit équipement est un chauffe-eau électrique.

En effet, le procédé de pilotage est particulièrement avantageux pour piloter le fonctionnement d'un chauffe-eau électrique. En cas d'absence d'un usager de son habitation, le chauffage d'eau peut engendrer un coût de consommation d'énergie inutile si l'eau n'est pas utilisée dans l'habitation pendant la période d'absence. Le procédé de pilotage permet, à la demande de l'usager, de suspendre le fonctionnement du chauffe-eau pendant une période de pilotage calculée.

Avantageusement, la période de pilotage calculée peut correspondre à la période d'absence renseignée par l'usager dans sa demande de pilotage utilisateur. La période de pilotage calculée peut avantageusement être plus courte afin de permettre la remise en marche du chauffe-eau avant le retour de l'usager.

Selon ce mode de réalisation, et en vue d'optimiser le confort de l'usager, la demande de suspension du fonctionnement du chauffe-eau est avantageusement traduite en au moins une requête d'application indiquant une suspension de l'alimentation du chauffe-eau sur une première période, et au moins une requête indiquant la remise en marche forcée du chauffe-eau sur une période précédant le retour de l'usager.

La présente divulgation vise aussi un système comportant un système d'information, un concentrateur et un dispositif de comptage pour la mise en œuvre du procédé défini ci-avant.

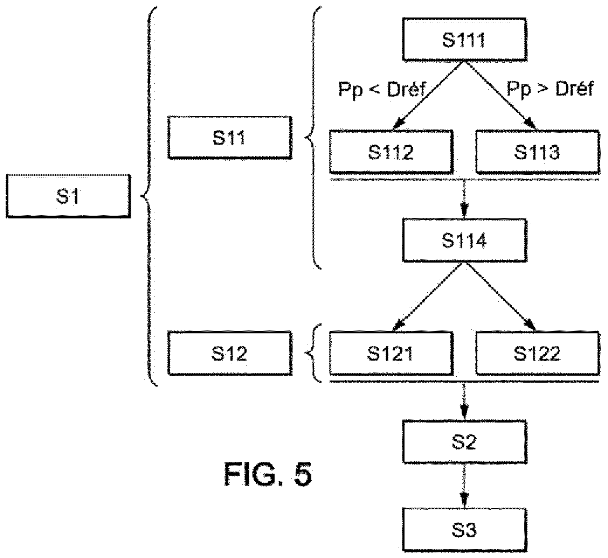

Elle vise aussi un programme informatique comportant des instructions pour la mise en œuvre de ce procédé, lorsque lesdites instructions (partagées notamment entre une mémoire du système d'information, une mémoire du concentrateur et une mémoire du dispositif de comptage) sont exécutées par un processeur d'un circuit de traitement (typiquement du système d'information, du concentrateur et du dispositif de comptage, respectivement). La figure 5 est un exemple d'algorithme général d'un tel programme informatique.

Elle vise aussi un (ou plusieurs) support(s) mémoire(s) stockant durablement de telles instructions.

### Brève description des dessins

D'autres caractéristiques, détails et avantages apparaîtront à la lecture de la description détaillée ci-après, et à l'analyse des dessins annexés, sur lesquels :
**Fig. 1**

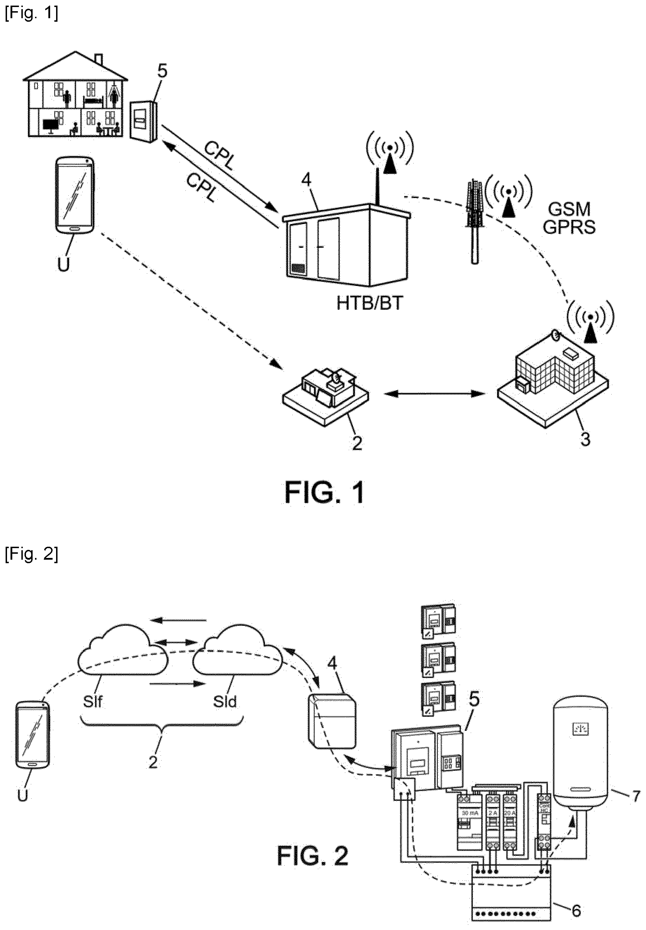

   [Fig. 1] représente un procédé de pilotage de la consommation électrique d'un équipement selon l'invention.
**Fig. 2**
   [Fig. 2] illustre la mise en œuvre du procédé représenté en figure 1 selon un premier mode de réalisation.
**Fig. 3**

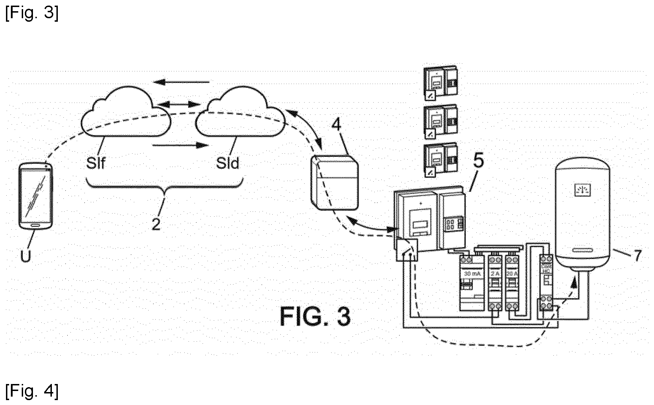

   [Fig. 3] illustre la mise en œuvre du procédé représenté en figure 1 selon un deuxième mode de réalisation.
**Fig. 4**

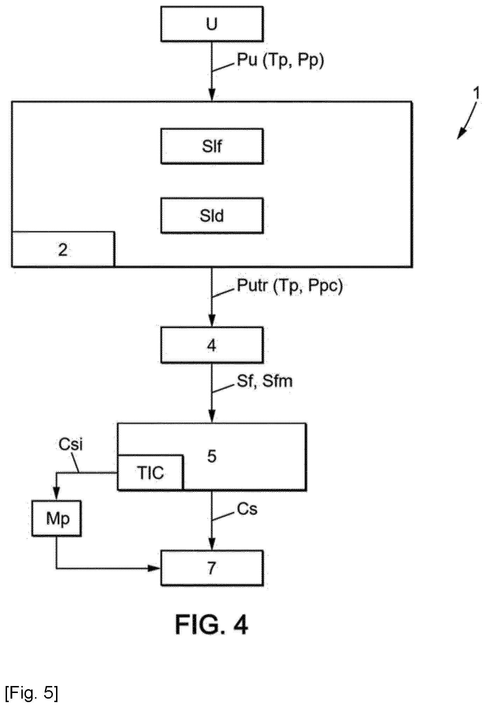

   [Fig. 4] représente plus en détail le procédé de pilotage représenté en figure 1.
**Fig. 5**
   [Fig. 5] représente les étapes d'un algorithme de mise en œuvre du procédé de pilotage représenté en figure 1.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est maintenant fait référence à la figure 1. La figure 1 est un schéma illustrant un procédé de pilotage 1 d'un équipement électrique 7 d'une installation électrique. L'équipement électrique 7 est avantageusement un moyen de chauffage d'eau ou tout moyen de chauffage à forte inertie. Dans un mode de réalisation particulier, l'équipement électrique 7 est un chauffe-eau électrique. Le procédé de pilotage 1 est mis en œuvre lorsqu'un utilisateur, usager U de l'installation électrique, transmet une demande de pilotage utilisateur Pu à un système d'information 2. La demande de pilotage utilisateur Pu est formulée à travers une interface homme-machine IHM à laquelle l'utilisateur peut accéder via un portail web ou une application web pour le pilotage de son usage.

Comme cela est représenté sur les figures 4 et 5, le procédé de pilotage 1 de l'équipement électrique 7 comprend une première étape S1 de réception et de traitement par le système d'information 2 de données de la demande de pilotage utilisateur Pu issue de l'usager U de l'installation électrique. La demande de pilotage utilisateur Pu comporte au moins un type de pilotage Tp et une période d'application dudit pilotage Pp. La demande de pilotage utilisateur Pu est traitée par le système d'information 2 en fonction : du type d'équipement 7 concerné par la demande de pilotage utilisateur Pu, du type de pilotage Tp et de la période Pp indiqués dans la demande de pilotage utilisateur Pu. Le traitement de la demande de pilotage utilisateur Pu permet d'obtenir une demande de pilotage utilisateur traitée, que le système d'information 2 transmet au concentrateur 4. La demande de pilotage utilisateur traitée Putr contient une période de pilotage calculée Ppc.

Le procédé de pilotage 1 comprend une deuxième étape S2 d'émission, par le concentrateur 4, d'un signal de fonctionnement modifié Sfm en fonction de la demande de pilotage traitée Putr. Le signal de fonctionnement modifié Sfm est transmis au dispositif de comptage 5 de l'installation électrique comprenant l'équipement 7 piloté.

Le procédé comprend une troisième étape S3 de pilotage, par le dispositif de comptage 5, de l'équipement électrique 7. Le dispositif de comptage 5 pilote l'équipement 7 à travers une consigne de fonctionnement Cs représentative du signal de fonctionnement modifié Sfm. Le pilotage de l'équipement 7 par le dispositif de comptage 5, selon le procédé 1, permet notamment de commander la puissance consommée par l'équipement électrique 7 sur une période donnée selon les instructions contenues dans la demande de pilotage utilisateur Pu.

Ainsi, ce procédé de pilotage 1 permet de diminuer la puissance électrique consommée par une installation suite à la demande de l'abonné, usager de l'installation en question. La demande de pilotage utilisateur Pu peut concerner, par exemple, une période durant laquelle un équipement électrique serait faiblement sollicité, typiquement une période d'absence de l'usager. Le procédé de pilotage 1 permet alors de commander le fonctionnement de l'équipement électrique 7 de façon programmée. Ce procédé 1 permet donc à l'usager de mieux ajuster la consommation électrique de son installation à ses besoins réels en énergie.

Un autre avantage du procédé 1 est la maîtrise plus précise des demandes d'énergie au niveau d'un réseau de distribution électrique, grâce à la possibilité offerte aux usagers de moduler plus intelligemment leur consommation électrique.. En effet, une augmentation importante et subite des demandes d'énergie pendant des périodes de pointe peut provoquer l'effondrement en tension ou en fréquence de la totalité du réseau de distribution si la production en électricité est insuffisante ou si la capacité d'acheminement de l'électricité est trop faible. Un tel procédé permet donc, au niveau du réseau de distribution électrique, une gestion plus pertinente des demandes d'énergie par rapport aux besoins réels des abonnés, grâce à un pilotage capable de cibler un point de livraison en particulier.

Le procédé met en œuvre un dispositif de comptage 5 de l'installation adapté pour piloter l'équipement électrique 7 à travers la consigne de fonctionnement Cs. Le dispositif de comptage 5 est adapté en outre pour communiquer avec le concentrateur 4 d'un poste de transformation électrique.

Le concentrateur 4 est un dispositif permettant, d'une part, d'interroger un ensemble de compteurs, puis de stocker et/ou traiter des données reçues depuis l'ensemble de compteurs. Plus particulièrement, le concentrateur 4 est classiquement installé côté BT au niveau des postes de distribution MT / BT et fonctionne comme une unité informatique dont les fonctions principales consistent à centraliser et traiter les données de comptage d'une grappe de compteurs électriques communicants par Courants Porteurs en Ligne (CPL).

Des données représentatives des données de comptage collectées et traitées sont ensuite transmises au système d'information 2 pour leur interprétation. Les données collectées sont transmises vers le système d'information (SI) 2 à travers un signal de type GPRS. Le concentrateur est en outre adapté pour recevoir et traiter des demandes de télé-opération depuis le système d'information 2 en vue de les transmettre vers les compteurs.

D'autre part, le concentrateur 4 est également adapté pour envoyer au dispositif de comptage 5 un signal de fonctionnement Sf de l'équipement électrique 7. Par signal de fonctionnement, il est entendu un signal contenant un ensemble de données permettant d'implémenter une demande de télé-opération sur un équipement électrique 7 ou sur l'installation électrique.

Classiquement, le fournisseur ou le gestionnaire du réseau électrique émet une instruction dans le cadre d'un pilotage automatique pour répondre aux besoins de lissage de la courbe de charge nationale. Cette instruction est généralement diffusée en « broadcast », c'est-à-dire pour plusieurs points de livraison d'installations localisées sur une même zone géographique. Lorsqu'une instruction est émise par le fournisseur ou le gestionnaire du réseau à destination d'un point de livraison, les signaux qui pilotent le dispositif de comptage 7 de l'installation électrique sont modifiés pour respecter cette instruction. Un des avantages du procédé 1 est d'intervenir sur la consommation de l'usager U au plus près du compteur électrique 5, et donc d'éviter l'installation de matériels à différents endroits de l'installation de cet usager U. Le coût de modification d'une installation électrique existante est limité voire inexistant.

Dans un premier mode de mise en œuvre du procédé de pilotage 1 décrit ci-après, le dispositif de comptage 5 est avantageusement un compteur électrique muni d'une électronique de gestion, un tel compteur étant dit également « compteur connecté » ou « compteur communicant ».

Ce type de compteur offre à l'usager U la possibilité d'être informé en temps réel de la consommation électrique globale de son installation. Ce type de compteur comporte également une sortie d'informations numériques, appelée « sortie télé-informations client », à partir de laquelle sont diffusées en continu des informations utilisables par les installations électriques en aval du compteur. Ces informations, appelées habituellement télé-informations, sont portées par des trames de signaux numériques contenant des champs d'informations regroupant notamment des paramètres contractuels tels que le type d'abonnement et les options choisies, et des mesures relatives à la consommation électrique instantanée de l'installation telles que l'intensité maximale appelée ou un avertissement de dépassement de puissance souscrite.

Le compteur communicant 5 permet en outre la récupération d'informations de consommation et leur transmission vers un système de gestion du gestionnaire du réseau de distribution d'électricité. Le compteur communicant 5 est notamment adapté pour communiquer avec le concentrateur 4 d'un poste de transformation électrique. L'échange de données entre le compteur communicant et le concentrateur 4 est également mis en œuvre à travers la technologie du Courant Porteur en Ligne (CPL) comme premier niveau de communication, via des câbles électriques. Un deuxième niveau de communication est assuré par un réseau de téléphonie mobile entre le concentrateur 4 et le système de gestion du gestionnaire du réseau de distribution.

Plus particulièrement, le compteur communicant 5 est configuré pour recevoir des instructions depuis le concentrateur 4 traduisant des demandes de télé-opération. Le compteur communicant 5 est notamment adapté pour mettre en œuvre un calendrier tarifaire fournisseur, administré par un fournisseur d'énergie dans le système de gestion du gestionnaire du réseau électrique et souscrit par un point de livraison (PDL).

Le calendrier tarifaire est décrit selon un format standardisé qui comprend notamment : le nom du calendrier tarifaire et la structure du calendrier. La structure du calendrier est définie notamment grâce à une description des journées-types, en base (10 possibles) et en pointe mobile (3 possibles) en indiquant les index activés et les positions des contacts secs. Les jours types peuvent être regroupés en semaines et en périodes sur l'année, et peuvent comporter des jours spéciaux tels que des jours fériés. Chaque type de jour peut comporter jusqu'à 11 tranches horaires. La structure du calendrier peut également indiquer le ou les groupes de pointe mobile attachés au calendrier, le cas échéant.

La définition d'un calendrier tarifaire fournisseur porte généralement sur une période d'un an. Les fournisseurs d'énergie électrique proposent donc à leurs abonnés, usagers d'une installation électrique associée à un point de livraison, des options tarifaires variées. Le téléchargement d'un calendrier tarifaire dans le dispositif de comptage permet d'émettre des consignes dont le contenu indique si la consommation de l'installation électrique d'un point de livraison PDL doit être réduite, par exemple pendant les heures de pointe, ou si l'installation électrique doit stocker de l'énergie, par exemple pendant les heures creuses, en chauffant de l'eau sanitaire ou en actionnant des moyens de chauffage à forte inertie tels que les murs ou le plancher.

Dans ce premier mode de mise en œuvre, le système d'information 2 comprend le système de gestion Sld du gestionnaire du réseau de distribution et un système d'information Slf du fournisseur d'énergie électrique. Le système d'information Slf du fournisseur est classiquement relié au système de gestion Sld afin d'envoyer des demandes de raccordement d'abonnés au réseau électrique et d'utiliser divers services proposés par le gestionnaire du réseau de distribution d'énergie électrique. En ce sens, l'échange de données entre le système de gestion Sld du gestionnaire du réseau et le système d'information Slf du fournisseur est assuré par une interface de communication, encore désignée par l'expression « système de gestion des échanges ».

La demande de pilotage utilisateur Pu est transmise par l'usager au système d'information Slf du fournisseur à travers l'interface homme-machine IHM. Avantageusement, l'interface homme-machine transmet au système d'information Slf du fournisseur une requête comportant : une date de début d'absence, une date de fin d'absence ou une période d'absence Pp, un type de pilotage Tp et l'au moins un équipement 7 concerné ou, plus généralement, le type d'équipement concerné. Avantageusement, lorsque l'usager renseigne une date de fin d'absence, la période d'absence Pp est obtenue à partir de la date de début d'absence et de la date de fin d'absence.

Avantageusement, les données relatives à la demande pilotage utilisateur Pu sont prétraitées selon d'autres champs d'information sélectionnés, notamment, mais non exclusivement, parmi la liste non-exhaustive suivante : informations d'identification du point de livraison de l'usager, puissance souscrite, options tarifaires, historique de consommation de l'installation. Ce prétraitement est une sous-étape S11 de l'étape S1 du procédé de pilotage 1, et fait partie du traitement par le système d'information 2 de la demande de pilotage utilisateur Pu en vue d'obtenir une demande de pilotage utilisateur traitée Putr.

Le prétraitement S11, par le système d'information Slf du fournisseur, des données relatives à la demande de pilotage utilisateur Pu comporte les sous-étapes suivantes représentées en figure 5 :
- sous-étape S111 : la demande de pilotage utilisateur est évaluée en fonction de la période d'absence Pp. Si la période d'absence Pp est d'une durée inférieure à une durée de référence Dréf par exemple égale à 3 jours, l'étape S112 suivante est réalisée ; sinon, l'étape S113 suivante est réalisée.
- sous-étape S112 : la demande de pilotage utilisateur Pu n'est pas prise en compte.
- sous-étape S113: la période d'absence Pp dépasse la durée de référence Dréf et la demande de pilotage utilisateur Pu est prise en compte. Selon une première variante, une date de fin d'absence corrigée est calculée en avançant d'une période corrective la date de fin d'absence renseignée dans la demande de pilotage utilisateur Pu. La période corrective est avantageusement de 48 heures. Par exemple, si la date de fin d'absence est le 23 juillet, la date de fin d'absence corrigée obtenue est le 21 juillet, considérée comme une date de fin réelle de l'absence de l'usager.

Dans une deuxième variante de la sous-étape S113, alternativement ou cumulativement à la première variante de la sous-étape S113, une date de début d'absence corrigée est calculée en repoussant d'une période corrective la date de début d'absence renseignée dans la demande de pilotage utilisateur Pu. La période corrective peut avantageusement être de quelques heures à quelques jours. La date de début d'absence corrigée est alors considérée comme une date de début réelle de l'absence de l'usager.

La période de pilotage calculée Ppc est obtenue à partir de la date de début corrigée et de la date de fin d'absence corrigée. La période de pilotage calculée Ppc permet de déclencher le pilotage de l'équipement dans l'installation de l'usager, en fonction du type de pilotage Tp renseigné dans la demande de pilotage utilisateur Pp. Le type de pilotage Tp est avantageusement un pilotage en « mode absence » dans lequel la consommation électrique de l'installation est réduite, des équipements de l'installation n'étant pas utilisés par l'usager absent.

Selon les périodes correctives retenues pour l'ajustement, la date de début d'absence corrigée peut correspondre à la date de fin d'absence renseignée dans la demande de pilotage utilisateur Pu. De même, la date de début d'absence corrigée peut correspondre à la date de fin d'absence renseignée dans la demande de pilotage utilisateur Pu.

La période corrective peut être ajustée pour augmenter ou réduire davantage la période de pilotage calculée Ppc. L'ajustement des périodes correctives, appliquées au calcul des dates de début et de fin d'absence pour le déclenchement et l'arrêt du pilotage ainsi que de la période de pilotage calculée Ppc, permet notamment de coordonner les périodes de pilotage d'un groupe d'usagers qui ont formulé une demande de pilotage utilisateur suite à leur absence.

L'ajustement de la période corrective appliquée au calcul de la date de début corrigée et de la période de pilotage calculée Ppc selon la deuxième variante de la sous-étape S113 permet de répartir sur différentes tranches horaires ou sur différents jours les dates de début du « mode absence » d'un groupe d'usagers qui ont formulé une demande de pilotage utilisateur suite à leur absence. Ces divers ajustements permettent au fournisseur de respecter des préconisations du gestionnaire du réseau de distribution quant à la sollicitation du réseau de distribution électrique, des compteurs communicants et des systèmes de gestion associés.

Avant leur transmission au système de gestion Sld, les données prétraitées sont mises en forme selon les spécifications des services du système de gestion Sld du gestionnaire du réseau.

Le prétraitement S11, par le système d'information Slf du fournisseur, des données relatives à la demande de pilotage utilisateur Pu comporte en outre la sous-étape suivante de mise en forme :
- sous-étape S114 : génération d'une requête d'application de la demande de pilotage utilisateur Pu sur la période de pilotage calculée Ppc.

La requête d'application est générée en fonction de la technologie du compteur communicant, et d'informations d'abonnement et/ou de consommation de l'installation. Plus précisément, la requête d'application peut solliciter l'activation d'un système de pointe mobile par le système de gestion Sld, ou la modification du calendrier fournisseur téléchargé dans le compteur communicant, en fonction des dates de début et de fin corrigées. Une demande de pilotage utilisateur Pu couvrant plusieurs jours peut avantageusement être traduite par plusieurs requêtes d'application couvrant chacune un seul jour.

Les données prétraitées contiennent donc les dates de début et de fin d'absence corrigées et/ou la période de pilotage calculée Ppc ainsi que la requête d'application de la demande de pilotage utilisateur Pu. Le système de gestion Sld du gestionnaire du réseau reçoit, depuis le système d'information Slf du fournisseur, les données prétraitées relatives à la demande de pilotage utilisateur Pu.

Les données prétraitées relatives à la demande de pilotage utilisateur Pu sont traitées, durant la sous-étape S12 du procédé de pilotage 1, par le système de gestion Sld du gestionnaire du réseau. Plus précisément, l'étape S12 de traitement des données prétraitées relatives à la demande de pilotage utilisateur Pu comporte, selon le contenu de la requête d'application, une sous-étape parmi les sous-étapes suivantes représentées en figure 5 :
- sous-étape S121 : un système de pointe mobile est activé à la date de début d'absence corrigée et désactivé à la date de fin d'absence corrigée. Le système de pointe mobile consiste à générer un signal d'ouverture d'un contact sec ouvert durant la période de pilotage calculée Ppc. Les journées-types sont substituées par des journées-types en pointe mobile qui décrivent des index activés et des positions de contacts secs spécifiques. L'alimentation électrique de l'équipement 7 est donc suspendue durant la période de pilotage calculée Ppc. Un signal d'émission de pointe mobile est généré à l'issue de la sous-étape S121.
- sous-étape S122 : le calendrier tarifaire fournisseur associé au point de livraison de l'installation est modifié entre la date de début d'absence corrigée et la date de fin d'absence corrigée. Cette sous-étape requiert une modification de la structure du calendrier tarifaire fournisseur, par la modification des journées-types appliquées durant la période de pilotage calculé Ppc. Les journées-types modifiées contiennent une position ouverte du contact sec associé à l'équipement 7 et sont programmées dans le calendrier durant la période de pilotage calculée Ppc. Un signal de changement de calendrier, contenant les données du calendrier tarifaire fournisseur modifié, est généré à l'issue de la sous-étape S122.

Le contact sec alimentant l'équipement 7 est ouvert pendant la période de pilotage calculée Ppc, et le fonctionnement de l'équipement 7 est suspendu.

Le système de pointe mobile mis en œuvre à la sous-étape S121 fonctionne en substituant des journées-types du calendrier par des journées-types de pointe mobile. Le tableau suivant est un exemple d'une journée-type avec des heures creuses 22h-6h d'un calendrier fournisseur téléchargé dans le compteur communicant et appliqué par défaut :

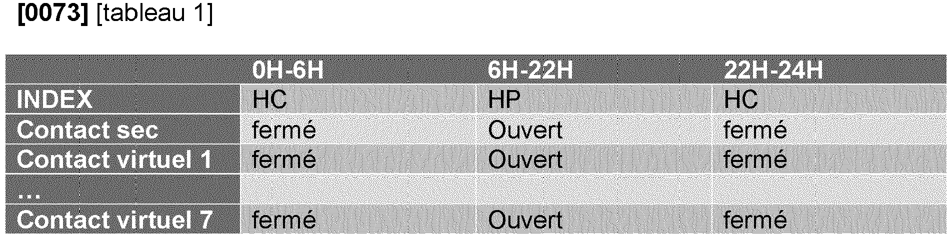

Le système de pointe mobile est mis en œuvre grâce à des journées-types de pointe mobile. Le tableau suivant est un premier exemple d'une journée-type JT1 de pointe mobile qui se substitue à une journée-type du calendrier lorsque le système de pointe mobile est activé.

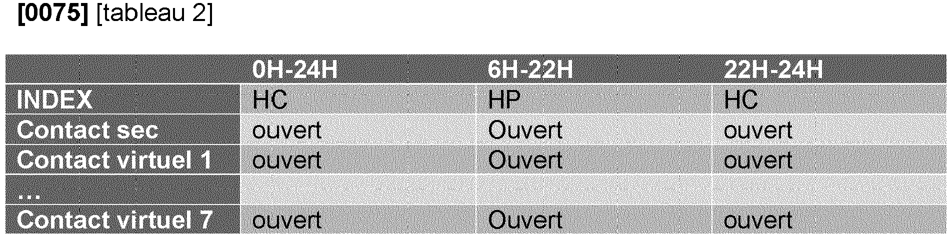

Ce premier exemple de journée-type JT1 de pointe mobile est appliqué pour forcer l'arrêt de l'alimentation de l'équipement 7, à travers l'ouverture des contacts secs et virtuels.

Le tableau suivant est un deuxième exemple d'une journée-type JT2 de pointe mobile qui se substitue à une journée-type du calendrier lorsque le système de pointe mobile est activé.

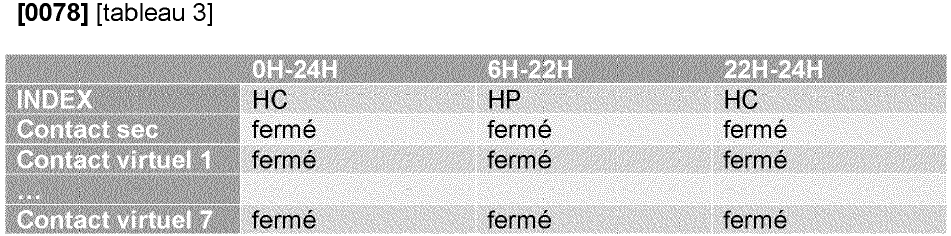

Ce deuxième exemple de journée-type JT2 de pointe mobile est appliqué pour forcer l'alimentation de l'équipement 7, à travers la fermeture des contacts secs et virtuels.

Dans un exemple particulier, l'usager programme le mode « absence » en formulant une demande de pilotage utilisateur Pu pour une période de pilotage Pp allant du 14 juillet au 3 août. La mise en œuvre du procédé 1 permet alors, selon une première variante, d'appliquer la journée-type JT1 du 14 juillet au 2 août, puis de la journée-type JT2 le 3 août de sorte que l'équipement 7 soit alimenté au retour de l'usager. Lorsque l'équipement 7 est un chauffe-eau électrique, cette première variante permet de s'assurer que l'eau soit chaude au retour de l'usager. Selon cette première variante, le système de pointe mobile est activé durant la période de pilotage calculée Ppc allant du 14 juillet au 3 août et substitue les journées-types du calendrier téléchargé dans le compteur par les journées-types de pointe mobile JT1 et JT2 durant la période de pilotage calculée Ppc. La mise en œuvre du procédé 1 permet également, selon une deuxième variante, d'appliquer la journée-type JT1 du 14 juillet au 2 août, puis de la ou d'une journée-type du calendrier le 3 août de sorte que l'équipement 7 soit alimenté au retour de l'usager. Lorsque l'équipement 7 est un chauffe-eau électrique, cette deuxième variante permet de s'assurer que l'eau soit chaude au retour de l'usager. En effet, l'équipement électrique, notamment un chauffe-eau électrique, peut être alimenté de façon suffisante durant les heures creuses programmées dans la journée-type du calendrier. Selon cette deuxième variante, le système de pointe mobile est activé durant la période de pilotage calculée allant du 14 juillet au 2 août et substitue les journées-types du calendrier téléchargé dans le compteur par la journée-type de pointe mobile JT1 durant la période de pilotage calculée Ppc.

La mise en œuvre du système de pointe mobile permet de ne pas affecter le calendrier tarifaire fournisseur, à travers la création de journées-types supplémentaires configurées pour se substituer occasionnellement et à la demande de l'usager, pendant une période définie par une horodate de début et une horodate de fin, aux journées- types prévues par défaut dans le calendrier tarifaire fournisseur.

Le traitement de la demande de pilotage utilisateur Pu permet d'obtenir une demande de pilotage utilisateur traitée Putr, que le système de gestion Sld transmet au concentrateur 4. La demande de pilotage utilisateur traitée Putr contient la période de pilotage calculée Ppc ainsi que le signal d'émission de pointe mobile ou le signal de changement de calendrier contenant les données du calendrier tarifaire fournisseur modifié.

Le concentrateur reçoit la demande de pilotage traitée Putr et envoie au compteur communicant 5 un signal de fonctionnement modifié Sfm représentatif de la demande de pilotage traitée Putr.

Le compteur communicant 5 émet, en fonction du signal de fonctionnement Sf, une consigne de fonctionnement à l'équipement 7. Lorsque le compteur communicant 5 reçoit un signal de fonctionnement modifié Sfm, la consigne de fonctionnement Cs permet de piloter l'équipement 7 à travers l'ouverture du contact sec associé. Le schéma en figure 3 représente l'architecture des échanges de données du procédé de pilotage 1 lorsque l'équipement 7, plus particulièrement le chauffe-eau électrique, est piloté par un contact sec, dit également « contact physique » du compteur.

Alternativement, la figure 3 représente l'architecture des échanges de données du procédé de pilotage 1 lorsque la consigne de fonctionnement Cs pilote l'équipement 7 à travers l'ouverture d'un contact virtuel. Plus précisément, le compteur communicant 5 comporte une interface de communication TIC adaptée à communiquer avec l'équipement 7. Une consigne de télé-information Csi est alors émise par l'interface de télécommunication TIC en fonction de la consigne de fonctionnement Cs. L'émission de la consigne de télé-information Csi peut être réalisée par tout moyen de communication, notamment par connexion filaire ou par transmission radio. Un module de pilotage Mp de l'équipement 7 interprète la consigne de télé-information Csi et exécute un ordre de pilotage de l'équipement conformément à la demande de pilotage utilisateur Pu. Le module de pilotage de l'équipement 7 peut faire partie intégrante de l'équipement 7 ou bien être installé dans un système de gestion locale de l'énergie consommée. En particulier, un système de gestion locale permet de programmer les usages des équipements pendant des heures creuses/pleines, de visualiser leur consommation instantanée et de pouvoir délester ou faire fonctionner certains équipements tels que le chauffe-eau, le chauffage ou autre selon des consignes de télé-information délivrées par le compteur électrique en fonction de l'abonnement souscrit.

### Liste des signes de référence

- 1 : procédé de pilotage
- 2 : système d'information
- 4 : concentrateur
- 5 : dispositif de comptage
- 7 : équipement électrique
- U : usager
- Cs : consigne de fonctionnement
- Mp : module de pilotage
- Pp : période d'application de pilotage
- Ppc : période de pilotage calculée
- Pu : demande de pilotage utilisateur
- Putr : demande de pilotage utilisateur traitée
- Sf : signal de fonctionnement
- Sfm : signal de fonctionnement modifié
- TIC : interface de communication
- Csi : consigne de télé-information
- Tp : type de pilotage.

## Revendications

1. Procédé de pilotage (1) d'au moins un équipement électrique (7) d'une installation comprenant en outre un dispositif de comptage (5) adapté pour piloter l'équipement électrique (7) à travers une consigne de fonctionnement (Cs), le dispositif de comptage (5) étant adapté en outre pour communiquer avec un concentrateur (4) d'un poste de transformation électrique, le concentrateur (4) étant adapté pour communiquer avec un système d'information (2),
dans lequel le concentrateur (4) est agencé pour envoyer au dispositif de comptage (5) un signal de fonctionnement (Sf) d'au moins un équipement électrique (7),
le procédé comportant les étapes suivantes :
a. Réception auprès du système d'information (2) de données d'une demande issue d'un usager (U), de pilotage utilisateur (Pu) de l'équipement (7), la demande de pilotage utilisateur (Pu) indiquant au moins un type de pilotage (Tp) et une période d'application dudit pilotage (Pp), et traitement de la demande de pilotage utilisateur (Pu) en fonction du type d'équipement (7), du type de pilotage (Tp) et de la période (Pp), pour délivrer au concentrateur (4) une demande de pilotage utilisateur traitée (Putr) indiquant une période de pilotage calculée (Ppc) ;
b. Emission, par le concentrateur (4), d'un signal de fonctionnement modifié (Sfm) en fonction de la demande de pilotage traitée (Putr);
c. Pilotage, par le dispositif de comptage (5), de l'équipement électrique (7) à travers la consigne de fonctionnement (Cs) en fonction dudit signal de fonctionnement modifié (Sfm).

2. Procédé de pilotage (1) selon la revendication précédente, dans lequel le signal de fonctionnement (Sf, Sfm) comporte un calendrier de fonctionnement, le signal de fonctionnement modifié (Sfm) comportant une modification dudit calendrier en fonction de ladite demande de pilotage utilisateur traitée (Putr).

3. Procédé de pilotage (1) selon la revendication précédente, dans lequel le calendrier comporte des jours types de fonctionnement, un jour type de fonctionnement comportant au moins un mode de fonctionnement sur un créneau horaire, la modification dudit calendrier consistant à remplacer un jour type dans la période de pilotage calculée (Ppc) par un jour type spécifique, le jour type spécifique étant déterminé en fonction du type de pilotage (Tp).

4. Procédé de pilotage (1) selon l'une des revendications précédentes, dans lequel la demande de pilotage utilisateur (Pu) est une demande d'arrêt de fonctionnement de l'équipement pendant la période d'application dudit pilotage (Pp).

5. Procédé de pilotage (1) selon l'une des revendications précédentes, dans lequel le dispositif de comptage commande l'équipement (7) à travers un contact physique, de type « contact sec à fermeture ».

6. Procédé de pilotage (1) selon l'une des revendications précédentes, dans lequel le dispositif de comptage (5) comporte une interface de communication (TIC) adaptée à communiquer avec l'équipement (7), l'interface de télécommunication (TIC) émettant une consigne de télé-information (Csi) en fonction de la consigne de fonctionnement (Cs), la consigne de télé-information (Csi) étant interprétée par un module de pilotage (Mp) de l'équipement (7).

7. Procédé de pilotage (1) selon l'une des revendications précédentes, dans lequel ledit équipement (7) est un chauffe-eau électrique.

8. Système comportant un système d'information (2), un concentrateur (4) et un dispositif de comptage (5) pour la mise en œuvre du procédé selon l'une des revendications 1 à 7.

9. Programme informatique comportant des instructions pour la mise en œuvre du procédé selon l'une des revendications 1 à 7, lorsque lesdites instructions sont exécutées par un processeur d'un circuit de traitement.

## Patentansprüche

1. Steuer-/Regelverfahren (1) für mindestens ein elektrisches Gerät (7) einer Anlage, die ferner eine Zählvorrichtung (5) umfasst, welche dazu angepasst ist, das elektrische Gerät (7) anhand einer Betriebsanweisung (Cs) zu steuern/regeln, wobei die Zählvorrichtung (5) ferner angepasst ist, um mit einem Konzentrator (4) einer elektrischen Umspannstation zu kommunizieren, wobei der Konzentrator (4) dazu angepasst ist, mit einem Informationssystem (2) zu kommunizieren,
wobei der Konzentrator (4) dazu eingerichtet ist, an die Zählvorrichtung (5) ein Betriebssignal (Sf) von mindestens einem elektrischen Gerät (7) zu senden,
wobei das Verfahren die folgenden Schritte umfasst:
a) Empfangen im Informationssystem (2) von Daten einer von einem Benutzer (U) ausgegebenen Benutzer-Steuer/Regel-Anforderung (Pu) für das Gerät (7), wobei die Benutzer-Steuer/Regel-Anforderung (Pu) mindestens eine Art (Tp) der Steuerung/Regelung und eine Anwendungsdauer (Pp) der Steuerung/Regelung angibt, und Bearbeiten der Benutzer-Steuer/Regel-Anforderung (Pu) gemäß der Art des Geräts (7), der Art der Steuerung/Regelung (Tp) und der Dauer (Pp), um an den Konzentrator (4) eine bearbeitete Benutzer-Steuer/Regel-Anforderung (Putr) zu liefern, die eine berechneten Steuer/Regel-Dauer (Ppc) angibt;
b) Aussenden eines modifizierten Betriebssignals (Sfm) durch den Konzentrator (4) in Abhängigkeit von der bearbeiteten Steuer/Regel-Anforderung (Putr);
c) Steuerung/Regelung des elektrischen Geräts (7) durch die Zählvorrichtung (5) anhand der Betriebsanweisung (Cs) in Abhängigkeit von dem modifizierten Betriebssignal (Sfm).

2. Steuer-/Regelverfahren (1) nach dem vorhergehenden Anspruch, wobei das Betriebssignal (Sf, Sfm) einen Betriebszeitplan enthält, wobei das modifizierte Betriebssignal (Sfm) eine Modifikation des Zeitplans gemäß der bearbeiteten Benutzer-Steuer/Regel-Anforderung (Putr) umfasst.

3. Steuer-/Regelverfahren (1) nach dem vorhergehenden Anspruch, wobei der Zeitplan Betriebstage-Typen umfasst, wobei ein Betriebstag-Typ mindestens einen Betriebsmodus über ein Zeitfenster umfasst, wobei die Modifikation des Zeitplans darin besteht, einen Tag-Typ während der berechneten Steuer/Regel-Dauer (Ppc) durch einen spezifischen Tag-Typ zu ersetzen, wobei der spezifische Tag-Typ gemäß der Art der Steuerung/Regelung (Tp) bestimmt wird.

4. Steuer-/Regelverfahren (1) nach einem der vorhergehenden Ansprüche, bei dem die Benutzer-Steuer/Regel-Anforderung (Pu) eine Anforderung ist, den Betrieb des Geräts während der Anwendungsdauer der Steuerung/Regelung (Pp) zu stoppen.

5. Steuer-/Regelverfahren (1) nach einem der vorangehenden Ansprüche, wobei die Zählvorrichtung das Gerät (7) durch einen physischen Kontakt vom Typ "potentialfreier Schließer-Kontakt" steuert/regelt.

6. Steuer-/Regelverfahren (1) nach einem der vorhergehenden Ansprüche, wobei die Zählvorrichtung (5) eine Kommunikationsschnittstelle (TIC) umfasst, die angepasst ist, um mit dem Gerät (7) zu kommunizieren, wobei die Telekommunikationsschnittstelle (TIC) eine Ferninformationsanweisung (Csi) in Abhängigkeit von der Betriebsanweisung (Cs) aussendet, wobei die Ferninformationsanweisung (Csi) von einem Steuer-/Regelmodul (Mp) des Geräts (7) interpretiert wird.

7. Steuer-/Regelverfahren (1) nach einem der vorhergehenden Ansprüche, wobei das Gerät (7) ein elektrischer Warmwasserbereiter ist.

8. System umfassend ein Informationssystem (2), einen Konzentrator (4) und eine Zählvorrichtung (5) zur Durchführung des Verfahrens nach einem der Ansprüche 1 bis 7.

9. Computerprogramm mit Anweisungen zum Implementieren des Verfahrens nach einem der Ansprüche 1 bis 7, wenn die Anweisungen von einem Prozessor einer Verarbeitungsschaltung ausgeführt werden.

## Claims

1. A method (1) for controlling at least one electrical piece of equipment (7) of an installation further comprising a counting device (5) adapted to control the electrical piece of equipment (7) through an operating setpoint (Cs), the counting device (5) being further adapted to communicate with a concentrator (4) of an electrical transformer station, the concentrator (4) being adapted to communicate with an information system (2),
wherein the concentrator (4) is arranged to send, to the counting device (5), an operating signal (Sf) of at least one piece of electrical equipment (7),
the method including the following steps:
a. receiving, from the information system (2), data of a request from a user (U), of user control (Pu) of the piece of equipment (7), the user control request (Pu) indicating at least one type of control (Tp) and a period of application of said control (Pp), and processing the user control request (Pu) based on the type of the piece of equipment (7), the control type (Tp) and the period (Pp), to deliver to the concentrator (4) a processed user control request (Putr) indicating a calculated control period (Ppc);
b. transmitting, by the concentrator (4) of a modified operating signal (Sfm) based on the processed control request (Putr);
c. controlling, by the the counting device (5), the electrical piece of equipment (7) through the operating setpoint (Cs) based on said modified operating signal (Sfm).

2. The control method (1) according to the preceding claim, wherein the operating signal (Sf, Sfm) includes an operating schedule, the modified operating signal (Sfm) including a modification of said schedule based on said processed user control request (Putr).

3. The control method (1) according to the preceding claim, wherein the schedule includes standard days of operation, a standard day of operation including at least one mode of operation on a time slot, the modification of said schedule consisting in replacing a standard day in the calculated control period (Ppc) by a specific standard day, the specific standard day being determined based on the control type (Tp).

4. The control method (1) according to one of the preceding claims, wherein the user control request (Pu) is a request to stop the operation of the piece of equipment during the period of application of said control (Pp).

5. The control method (1) according to one of the preceding claims, wherein the counting device drives the piece of equipment (7) through a physical contact, of the "normally open contact" type.

6. The control method (1) according to one of the preceding claims, wherein the counting device (5) includes a communication interface (TIC) adapted to communicate with the piece of equipment (7), the telecommunication interface (TIC) issuing a remote information setpoint (Csi) based on the operating setpoint (Cs), the remote information setpoint (Csi) being interpreted by a module (Mp) for controlling the piece of equipment (7).

7. The control method (1) according to one of the preceding claims, wherein said piece of equipment (7) is an electric water heater.

8. A system including an information system (2), a concentrator (4) and a counting device (5) for implementing the method according to one of claims 1 to 7.

9. A computer program including instructions for implementing the method according to one of claims 1 to 7, when said instructions are executed by a processor of a processing circuit.
